# EUROPEAN PATENT SPECIFICATION

(11) **EP 0 481 655 B1**
(45) Date of publication and mention of the grant of the patent: **17.09.1997**
(21) Application number: 91309223.5
(22) Date of filing: 08.10.1991
(51) Int. Cl.: A01D 34/70

(54) **Lawn mower**
Rasenmäher
Tondeuse à gazon

(30) Priority: 18.10.1990 GB 9022636
(43) Date of publication of application: 22.04.1992
(73) Proprietor: Black & Decker Inc., Newark Delaware 19711 (US)
(72) Inventor: Stones, Kevin, Bishop Auckland, County Durham DL14 6AE (GB); Bone, Daniel, Langley Moor, County Durham DH7 8LW (GB)
(74) Representative: Stagg, Diana Christine

(56) References cited:
- EP-A- 0 037 871
- EP-A- 0 045 177
- WO-A-91/02449
- GB-A- 2 017 475
- GB-A- 2 127 665
- US-A- 3 838 558

## Description

This invention relates to a lawn mower of the type which in operation is supported by a cushion of air and which comprises a motor-driven blade rotatable about a substantially vertical axis and a fan rotatable about the same axis, the blade and fan being surrounded by a hood having one or more inlets for air to form the cushion of air. Such lawn mowers are known as "hover" mowers.

The first hover mowers left the cut grass, normally in a finely divided state, on the ground. Users could then either leave the cut grass on the ground, for example as a mulch, or they could pick the cut grass up in a secondary operation. In due course attempts were made to design mowers of the hover type which picked the grass up as they went along. Examples of such mowers are described in Patent Specifications GB-A-2,017,475 and EP-B-0,037,871. In the construction described in the former, cut grass is blown by the air forming the air cushion through an outlet in the hood surrounding the cutting blade and into a grass collecting container attached to the rear of the mower. The efficient operation of this mower requires a specially-shaped hood. In the construction disclosed in Specification EP-B-0,037,871, the cut grass is effectively sucked up by the air stream which then forms the air cushion on which the mower hovers. Thus, the air stream to the fan wheel forming the hover air cushion, before reaching the fan wheel, is used to pick up cut grass and transport it into a grass collecting chamber in the mower.

A disadvantage of the former type of grass-collecting mower, i.e. that which uses the hover air to blow cut grass into the grass bag, is that it requires a fairly complicated hood configuration. A disadvantage of the latter type of mower, i.e. that which uses the air forming the air cushion to suck up cut grass, is that as the grass collecting chamber fills up, it becomes heavier and the filter tends to become blocked. Thus air is prevented from reaching the fan, and the cushion of air cannot be maintained at a level which will enable effective grass cutting.

WO-A-91 02449 relates both to lawn mowers and to vacuum cleaners. Insofar as it relates to lawn mowers, it is principally directed towards single impeller rotary mowers of the air-supported type, in which a plate member is provided to control air flow within the housing of the mower, in order to provide improved support for the mower and to support and direct out grass into a discharge duct. Figure 5 shows a mower with a dual impeller, and this dual impeller is a two stage single impeller, both stages of which co-operate to provide an air flow to lift the mower.

The air flows generated by both stages of the impeller discharge into the chamber defined by the plate member and a platform, where they mix. The cutting blade does not define a base to this chamber. As is stated in the description, the air pressure generated is more than sufficient to lift the mower and some of the excess air is bled off into an air pod adaptor to support a grass collection receptacle.

It is an object of the present invention to provide a lawn mower of the "hover" type with improved grass collection.

It is an object of the present invention to provide a lawn mower of the type which in operation is supported by a cushion of air and has a knife rotatable about a vertical axis, a first fan adapted to generate a first air stream, a second fan adapted to generate a second air stream and barrier means preventing said second air stream from contributing to said first air stream, characterised in that said cushion of air is provided by said first air stream generated by the first fan and cut grass is transported by suction into collecting means by the second air stream generated by the second fan.

The two air streams are caused by two separate fans driven by one or two motors. Thus, separate motors each driving a fan may be used to produce the two air streams, one of the motors also carrying the rotating grass-cutting blade. Alternatively, the two fans may be driven by a single motor.

In a preferred embodiment of the invention, the first and second air streams are created by respective fans mounted on opposite ends of the motor driving the cutting blade.

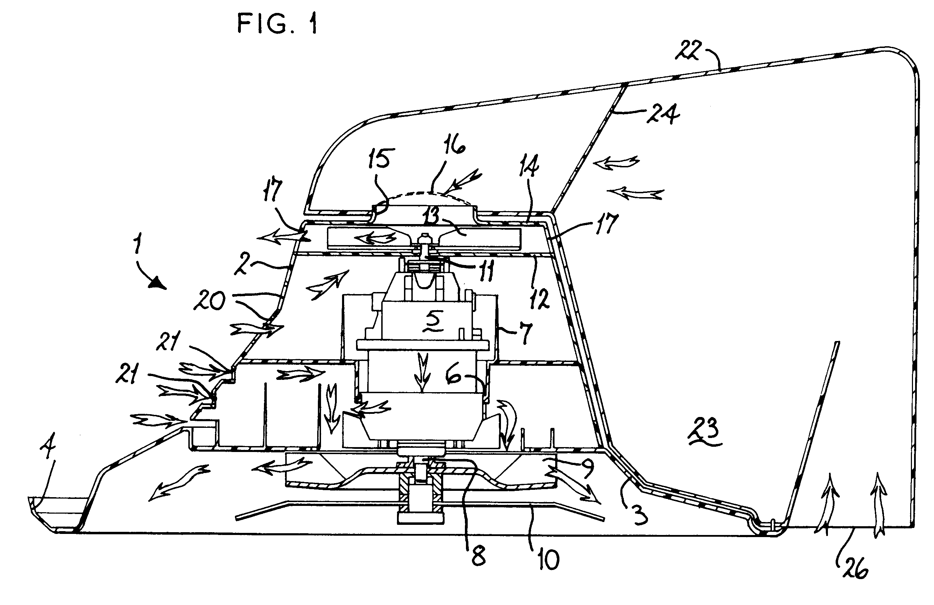

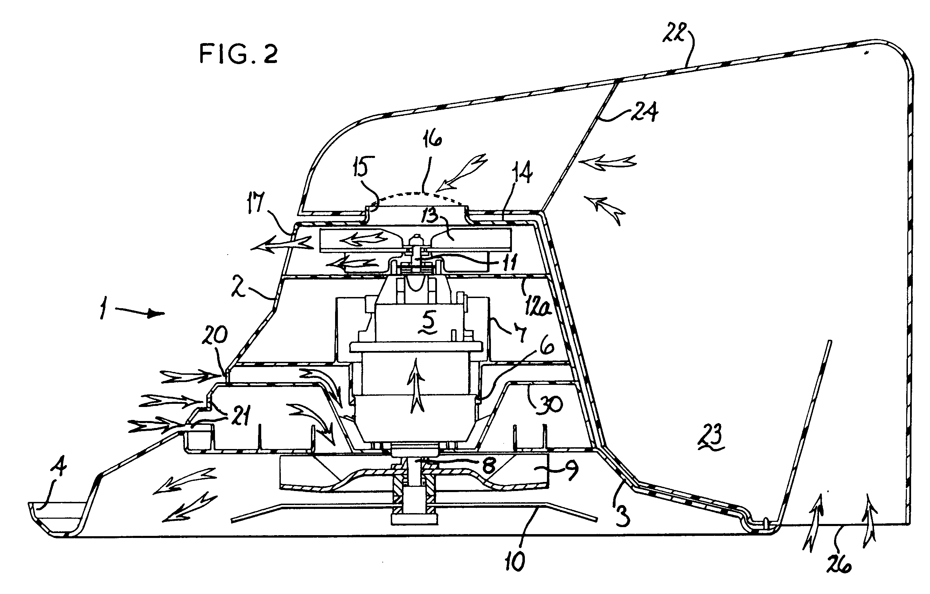

Two embodiments of the invention will now be described, with reference to the accompanying drawings, in which
Figures 1 and 2 are longitudinal vertical sections through the two mowers. Corresponding parts of the two mowers are given the same reference numerals.

Referring to Figure 1, a lawn mower of the hover type comprises a body 1, suitably injection moulded from a thermoplastics material, the body comprising a housing 2 mounted on an outwardly-directed hood 3 terminating in an upwardly-directed peripheral rim 4. An electric motor 5 is seated on an annular flange 6 of a stepped collar 7 attached to the inside wall of housing 2.

Extending from the lower end of motor 5 is an output shaft 8 on which is mounted a fan 9 and a cutting blade 10. The upper end 11 of output shaft 8 extends upwardly from the upper end of motor 5, and penetrates a barrier wall 12 mounted at the upper end of housing 2, and thereabove mounts a second fan 13.

Fan 13 is contained in a chamber formed by the barrier wall 12 and an apertured cover 14. Cover 14 has a central opening 15, covered by a wire mesh or other air-permeable material 16, and a series of circumferential apertures 17.

Housing 2 is provided with air inlets 20 and 21.

Mounted on the lawn mower is a grass collecting box 22, comprising a collecting chamber 23 and a filter comprising an apertured plate 24. The front end of the grass box 22 is fitted around the opening 15.

In use, the fans 9 and 13 produce separate air streams, that produced by fan 9 providing the air cushion on which the mower hovers, and that provided by fan 13 sucking the cut grass into the box 22.

More specifically, fan 9 draws air into the housing 2 through air inlets 21, the air then passing into the hood 3 to form the air cushion. Air is also passed into the upper part of the housing 2 through air inlets 20, this air passing into the annular air passage between the motor 5 and the collar 7 and through the motor to cool the motor. This motor-cooling air can then join the air entering through the inlets 21 to form the hover cushion. Quite separately, the fan 13 causes air to enter the grass box 22 through an aperture 26, such air entraining cut grass, leaves and similar debris. Whilst the air passes through filter plate 24, the grass cuttings and leaves cannot do so, and fall back into the collecting chamber 23.

The embodiment illustrated in Figure 2 is similar to that of Figure 1, but differs in two major respects.

Firstly a separator 30 directs air entering through inlet 20 to the base of motor 5, the motor-cooling air thereafter passing upwardly in the machine and exiting through outlet apertures 17 via apertured wall 12a, which in this embodiment does not form a barrier between the fan 13 and the inside of the housing 2. Separator 30 does, however, separate the motor-cooling air stream from the air cushion-forming air stream entering through the inlets 21. Secondly, the fan 13 is a double-sided one, and performs the dual function of drawing air into the grass box through aperture 26 and drawing motor-cooling air upwardly through the motor 5.

It will be appreciated that, in contrast to the prior art machines, as the grass box 22 fills with cut grass and therefore becomes heavier, the suction provided by fan 13 gradually reduces and this allows more power to go to fan 9, thus providing the machine with greater lift.

Although the described embodiments show the preferred construction wherein the two fans are mounted at opposite ends of the drive motor, it would be possible to mount them on the same side, the lower end, through suitable means. It would also be possible to provide two separate motors, one providing the air stream for the hover cushion, and the other providing the air stream for sucking the cut grass into the grass box. Preferably, however, a single motor is used for both purposes, and most preferably the fans are mounted at opposite ends of this single motor, the gyroscopic effect of the two fans making the mower a very stable machine.

If desired, the exhaust air exiting from outlet apertures 17 may be used to drive other useful accessories, e.g. a lawn fertiliser spreader mounted on the machine.

The mowers illustrated will of course be provided with handles and electrical connections, but for the sake of convenience these are not shown.

## Claims

1. A lawn mower of the type which in operation is supported by a cushion of air and has a knife (10) rotatable about a vertical axis, a first fan (9) adapted to generate a first air stream, a second fan (13) adapted to generate a second air stream and barrier means (12) preventing said second air stream from contributing to said first air stream, characterised in that said cushion of air is provided by said first air stream generated by the first fan (9) and cut grass is transported by suction into collecting means(22) by the second air stream generated by the second fan (13).

2. A lawn mower according to Claim 1, characterised in that said first and second air streams are provided by first and second fans(9, 13) driven by a motor (5) which also drives the rotatable knife (10).

3. A lawn mower according to Claim 2, characterised in that said first and second fans (9, 13) are mounted on opposite ends of said motor (5).

4. A lawn mower according to Claim 2 or Claim 3, characterised in that said second fan (13) also provides a third air stream for cooling the motor (5).

5. A lawn mower according to Claim 1, characterised in that it comprises
(a) an electric motor (5) mounting a rotatable knife (10) and a first fan (9) at its lower end and a second fan (13) at its upper end,
(b) a hood (3) surrounding said rotatable knife (10) and said first fan (9) and having at least one aperture (21) allowing ingress of air to said hood,
(c) a housing (2) surrounding said motor (5) and said second fan (13) and having at least one aperture (26) allowing access of air to said second fan (13),
(d) a barrier wall (12) between said first and second fan (9, 13) and
(e) a grass collecting chamber (22) in communication with said at least one aperture (26) allowing access of air to said second fan (13).

6. A lawn mower according to Claim 5, characterised in that said second fan (13) is mounted on an output shaft (8) of the motor which penetrates a barrier wall (12) in said housing (2) and said second fan (13) being mounted above said barrier wall (12).

## Patentansprüche

1. Rasenmäher des Typs, der im Betrieb von einem Luftkissen abgestützt wird und der ein um eine vertikale Achse drehbares Messer (10), ein zur Erzeugung eines ersten Luftstroms geeignetes erstes Gebläse (9), ein zur Erzeugung eines zweiten Luftstroms geeignetes zweites Gebläse (13) und Sperrmittel (12) aufweist, die verhindern, daß der zweite Luftstrom zum ersten Luftstrom beiträgt, **dadurch gekennzeichnet**, daß das Luftkissen vom vom ersten Gebläse (9) erzeugten ersten Luftstrom gebildet wird und geschnittenes Gras durch Ansaugen durch den vom zweiten Gebläse (13) erzeugten zweiten Luftstrom in Sammelmittel (22) transportiert wird.

2. Rasenmäher nach Anspruch 1, **dadurch gekennzeichnet**, daß die ersten und zweiten Luftströme von ersten und zweiten Gebläsen (9, 13) geliefert werden, die von einem Motor (5) angetrieben sind, der auch das drehbare Messer (10) antreibt.

3. Rasenmhäher nach Anspruch 2, **dadurch gekennzeichnet**, daß die ersten und zweiten Gebläse (9, 13) an gegenüberliegenden Enden des Motors (5) befestigt sind.

4. Rasenmäher nach Anspruch 2 oder 3, **dadurch gekennzeichnet**, daß das zweite Gebläse (13) auch einen dritten Luftstrom zur Kühlung des Motors (5) liefert.

5. Rasenmäher nach Anspruch 1, **dadurch gekennzeichnet**, daß er
(a) einen Elektromotor (5) mit am unteren Ende befestigten drehbaren Messer (10) und einem ersten Gebläse (9) und am oberen Ende befestigten zweiten Gebläse (13),
(b) eine das drehbare Messer (10) und das erste Gebläse (9) umgebende und mindestens eine den Eintritt von Luft ermöglichende Öffnung (21) aufweisende Haube (3),
(c) ein den Motor (5) und das zweite Gebläse (13) umgebendes und mindestens eine den Zutritt von Luft zum zweiten Gebläse (13) ermöglichendes Gehäuse (2),
(d) eine Sperrwand (12) zwischen erstem und zweitem Gebläse (9, 13) und
(e) eine Grassammelkammer (22) aufweist, die in Verbindung mit der mindestens einen Öffnung (26) steht, die den Zutritt von Luft zum zweiten Gebläse (13) ermöglicht.

6. Rasenmäher nach Anspruch 5, **dadurch gekennzeichnet**, daß das zweite Gebläse (13) an einer Ausgangswelle (8) des Motors befestigt ist, die eine Sperrwand (12) im Gehäuse (2) durchdringt, und daß das zweite Gebläse (13) oberhalb der Sperrwand (12) befestigt ist.

## Revendications

1. Tondeuse à gazon du type qui, en fonctionnement, est supportée par un coussin d'air et a une lame (10) rotative autour d'un axe vertical, un premier ventilateur (9) adapté pour produire un premier flux d'air, un second ventilateur (13) adapté pour produire un second flux d'air, et des moyens formant barrière (12) empêchant ledit second flux d'air de contribuer audit premier flux d'air, caractérisée en ce que ledit coussin d'air est fourni par ledit premier flux d'air produit par le premier ventilateur (9) et l'herbe coupée est transportée par aspiration a' l'intérieur de moyens de collecte (22) par le second flux d'air produit par le second ventilateur (13).

2. Tondeuse à gazon selon la revendication 1, caractérisée en ce que lesdits premier et second flux d'air sont fournis par les premier et second ventilateurs (9, 13) entraînés par un moteur (5) qui entraîne aussi la lame rotative (10).

3. Tondeuse à gazon selon la revendication 2, caractérisée en ce que lesdits premier et second ventilateurs (9, 13) sont montés sur des extrémités opposées dudit moteur (5).

4. Tondeuse à gazon selon la revendication 2 ou 3, caractérisée en ce que ledit second ventilateur (13) fournit aussi un troisième flux d'air pour refroidir le moteur (5).

5. Tondeuse à gazon selon la revendication 1, caractérisée en ce qu'elle comporte :
(a) un moteur électrique (5) supportant une lame rotative (10) et un premier ventilateur (9) à son extrémité inférieure et un second ventilateur (13) à son extrémité supérieure,
(b) un capot (3) entourant ladite lame rotative (10) et ledit premier ventilateur (9) et ayant au moins une ouverture (21) permettant l'admission de l'air vers ledit capot,
(c) un boîtier (2) entourant ledit moteur (5) et ledit second ventilateur (13) et ayant au moins une ouverture (26) permettant l'accès de l'air audit second ventilateur (13),
(d) une paroi (12) formant barrière entre lesdits premier et second ventilateurs (9, 13) et
(e) une chambre de collecte d'herbe (22) communiquant avec ladite au moins une ouverture (26) permettant l'accès de l'air vers ledit second ventilateur (13).

6. Tondeuse à gazon selon la revendication 5, caractérisée en ce que ledit second ventilateur (13) est monté sur un arbre de sortie (8) du moteur qui pénètre dans une paroi (12) formant barrière dans ledit boîtier (2) et ledit second ventilateur (13) étant monté au-dessus de ladite paroi (12) formant barrière.
